# EUROPÄISCHE PATENTSCHRIFT

(11) **EP 1 834 194 B1**
(45) Veröffentlichungstag und Bekanntmachung des Hinweises auf die Patenterteilung: **18.07.2012**
(21) Anmeldenummer: 05823764.5
(22) Anmeldetag: 09.12.2005
(51) Int. Cl.: G02B 1/04

(54) **SUBSTRATMATERIALIEN FÜR TRANSPARENTE SPRITZGUSSTEILE**
SUBSTRATE MATERIALS FOR TRANSPARENT INJECTION MOULDED PIECES
MATERIAUX DE SUBSTRAT POUR PIECES MOULEES PAR INJECTION TRANSPARENTES

(30) Priorität: 22.12.2004 DE 102004061753
(43) Veröffentlichungstag der Anmeldung: 19.09.2007
(73) Patentinhaber: Bayer MaterialScience AG, 51368 Leverkusen (DE)
(72) Erfinder: HAESE, Wilfried, 51519 Odenthal (DE); REITZE, Burkhard, 51429 Bergisch Gladbach (DE); MEYER, Alexander, 40237 Düsseldorf (DE); PREIN, Michael, 47809 Krefeld (DE); BRUDER, Friedrich-Karl, 47800 Krefeld (DE); ROPPEL, Michael, 51399 Burscheid (DE); VOETZ, Matthias, 51375 Leverkusen (DE); RÜHLE, Dieter, 51519 Odenthal (DE)
(86) Internationale Anmeldenummer: PCT/EP2005/013222
(87) Internationale Veröffentlichungsnummer: WO 2006/072352

(56) Entgegenhaltungen:
- EP-A- 0 922 728
- US-A- 6 140 457

## Beschreibung

Gegenstand der Erfindung sind Polycarbonate als Substratmaterial zur Herstellung transparenter Spritzgussteile, insbesondere zur Herstellung von zu beschichtenden Spritzgussteilen sowie Formteile erhältlich aus den erfindungsgemäßen Polycarbonaten. Formteile können z.B. transparente Platten, Linsen, optische Speichermedien bzw. Träger für optische Speichermedien oder auch Artikel aus dem Bereich des Automotive Glazings wie z.B. Streulichtscheiben sein. Gegenstand der Erfindung sind insbesondere optische Speichermedien bzw. Träger für optische Speichermedien wie z.B. beschreibbare optische Datenspeicher, welche gute Beschichtbarkeit und Benetzungsfähigkeit aufweisen und z.B. für die Auftragung von Farbstoffen aus Lösung insbesondere aus unpolaren Medien geeignet sind. Zudem weisen die optischen Spritzgussteile aus den erfindungsgemäßen Polycarbonaten eine geringere Verschmutzungsneigung auf.

Transparente Spritzgussteile sind vor allem im Bereich des Glazings und der Speichermedien von Bedeutung.

Optische Datenaufzeichnungsmaterialien werden zunehmend als variables Aufzeichnungs- und/oder Archivierungsmedium für große Datenmengen verwendet. Beispiele für diese Art von optischen Datenspeichern sind CD, Super- Audio-CD, CD -R, CD -RW, DVD, DVD - R, DVD+R, DVD - RW, DVD+RW und BD.

Transparente thermoplastische Kunststoffe wie zum Beispiel Polycarbonat, Polymethylmethacrylat und chemische Modifikationen hiervon werden typischerweise für optische Speichermedien eingesetzt. Polycarbonat als Substratmaterial eignet sich insbesondere für einmal beschreibbare und mehrfach auslesbare sowie auch für mehrfach beschreibbare optische Disks sowie für die Herstellung von Formteilen aus dem Bereich des Automotive Glazings, wie z.B. von Streulichtscheiben. Dieser thermoplastische Kunststoff verfügt über eine ausgezeichnete mechanische Stabilität, ist wenig anfällig gegenüber Dimensionsveränderungen und zeichnet sich durch eine hohe Transparenz und Schlagzähigkeit aus.

Gemäß DE-A 2 119 799 erfolgt die Herstellung von Polycarbonaten unter Beteiligung phenolischer Endgruppen, nach dem Phasengrenzflächenverfahren wie auch dem Verfahren in homogener Phase.

Polycarbonat, hergestellt nach dem Phasengrenzflächenprozess, kann für die Herstellung von optischen Datenspeichern der oben beschriebenen Formate wie z.B. für Compact Disks (CD) oder Digital Versatile Disks (DVD) verwendet werden. Diese Disks haben oft die Eigenschaft während ihrer Herstellung im Spritzgussverfahren ein hohes elektrisches Feld aufzubauen. Diese hohe Feldstärke auf dem Substrat führt während der Herstellung der optischen Datenspeicher, z.B. zur Anziehung von Staub aus der Umgebung, bzw. zum Verkleben der Spritzgussartikel wie z.B. der Disks untereinander, was die Qualität der fertigen Spritzgussartikel mindert und das Spritzgussverfahren erschwert.

Es ist ferner bekannt, dass die elektrostatische Aufladung insbesondere von Disks (für optische Datenträger) zu einer mangelnden Benetzbarkeit vor allem mit unpolaren Medien, wie z.B. einem unpolaren Farbstoff oder einem Farbstoffauftrag aus Lösungsmitteln, wie z.B. Dibutylether, Ethylcyclohexan, Tetrafluorpropanol, Cyclohexan, Methylcyclohexan oder Octafluprpropanol, führt. So verursacht ein hohes elektrisches Feld an der Oberfläche des Substrates während des Farbstoffauftrags bei beschreibbaren Datenspeichern zum Beispiel eine unregelmäßige Beschichtung mit Farbstoff und führt damit zu Defekten in der Informationsschicht.

Das Maß der elektrostatischen Aufladung eines Substratmaterials kann z.B. durch Messung des elektrischen Feldes in einem bestimmten Abstand zur Substratoberfläche quantifiziert werden.

Im Falle eines optischen Datenspeichers bei dem ein beschreibbares Substrat auf der Oberfläche in einem Spin Coating Prozess aufgetragen wird, ist eine niedrige absolute elektrische Feldstärke erforderlich, um die gleichmäßige Auftragung der beschreibbaren Schicht zu gewährleisten und einen störungsfreien Produktionsprozess sicherzustellen.

Außerdem verursacht ein hohes elektrostatisches Feld aufgrund der oben beschriebenen Fakten Ausbeuteverluste hinsichtlich des Substratmaterials. Dies kann zum Stopp des jeweiligen Produktionsschrittes führen und ist mit hohen Kosten verbunden.

Um dieses Problem einer hohen statischen Aufladung zu lösen, wurden mehrere Ansätze verfolgt. Im Allgemeinen werden Antistatika als Additive dem Substratmaterial zugesetzt. Antistatische Polycarbonat-Zusammensetzungen werden z.B. in JP 62 207 358-A beschrieben. Hier werden u. a. Phosphorsäurederivate als Antistatika dem Polycarbonat zugesetzt. EP 0922 728 beschreibt verschiedene Antistatika wie Polyalkylenglykolderivate, ethoxyliertes Sorbitanmonolaurat, Polysiloxanderivate, Phosphinoxide, sowie Distearylhydroxyamin, welche einzeln oder als Mischungen eingesetzt werden. Die japanische Anmeldung JP 62 207 358 beschreibt Ester der phosphorigen Säure als Additive. In US Patent 5,668,202 werden Sulfonsäurederivaten beschrieben. In US-A 6,262,218 und 6,022,943 wird der Einsatz von Phenylchlorformiat beschrieben, um den Endgruppengehalt in Schmelze-Polycarbonat zu erhöhen. Nach dieser Anmeldung soll sich ein Endgruppengehalt >90 % positiv auf die elektrostatischen Eigenschaften auswirken. In WO 00/50 488 wird 3,5-Di-tert-butylphenol als Kettenabbrecher im Phasengrenzflächenverfahren eingesetzt. Dieser Kettenabbrecher führt zu einer niedrigeren statischen Aufladung des entsprechenden Substratmaterials verglichen mit herkömmlichen Kettenabbrechern. JP 62 207 358-A beschreibt Polyethylen- bzw. Polypropylenderivate als Additive für Polycarbonat. In EP-A 1 304 358 wird der Einsatz kurzer Oligomere wie z.B. Bisphenol A-bis-(4-tert.-butylphenylcarbonat) in Polycarbonat aus dem Umesterungsprozess beschrieben.

Die beschriebenen Additive können sich jedoch auch nachteilig auf die Eigenschaften des Substratmaterials auswirken, da sie dazu neigen, aus dem Material auszutreten. Dies ist zwar für die Antistatik-Eigenschaften ein wünschenswerter Effekt kann aber zu Belagsbildung oder mangelhafter Abformung führen. Weiterhin kann auch der Gehalt an Oligomeren im Polycarbonat zu einem schlechteren mechanischen Eigenschaftsniveau und zu einer Absenkung der Glasübergangstemperatur führen. Ferner können diese Zusätze Nebenreaktionen verursachen. Das nachträgliche "Endcapping" von Polycarbonat, welches aus dem Umesterungsprozess gewonnen wurde, ist aufwendig und die erreichten Resultate nicht optimal. Neue Endgruppen in das Material einzuführen ist mit hohen Kosten verbunden.

Somit stellt sich die Aufgabe eine Zusammensetzung bzw. ein Substratmaterial zur Verfügung zu stellen, welches den Anforderungen eines möglichst niedrigen Potenzials (Betrag) in Verbindung mit geringen Potenzialunterschieden an der Substratoberfläche genügt (gemessen in einem bestimmten Abstand zur Substratoberfläche) und die oben beschriebenen Nachteile vermeidet.

Vorteilhaft sind vor allem diejenigen Substratmaterialien, die keine oder möglichst wenige Additive enthalten. So sind z.B. die in EP-A 922 728 beschriebenen Antistatika wie Polyoxyethylensorbitanmonolaurat, Polyoxyethylenmonolaurat und Polyoxyethylenmonostearat in den zugesetzten Mengen von 50 - 200 ppm zwar wirksam bezüglich der antistatischen Eigenschaften, aber können wie oben beschrieben für die gesamte Performance des Spritzgusskörpers nachteilig sein.

Darüber hinaus können im Material noch zusätzliche Additive enthalten sein, wie z.B. Flammschutzmittel, Entformungsmittel, UV-Stabilisatioren, Thermostabilisatoren, wie sie für aromatische Polycarbonate bekannt sind. Allerdings ist aus den oben beschriebenen Gründen die Menge der eingesetzten Additive möglichst gering zu halten. Beispiele für derartige Additive sind Entformungsmittel auf Basis von Stearinsäure und/oder Stearinalkohol, besonders bevorzugt Pentaerythritstearat, Trimethylolpropantristearat, Pentaerytritdistearat, Stearylstearat, und Glycerinmonostearat, sowie Thermostabilisatoren auf Basis von Phosphanen, Phosphiten und Phosphorsäure.

Die vorliegende Erfindung stellt ein Substratmaterial, welches insbesondere für wiederbeschreibbare optische Datenträger mit guter Beschicht- und Benetzbarkeit sowie geringer Verschmutzungsneigung verwendbar ist, bereit. Das erfindungsgemäße Substratmaterial führt im Produktionsprozess zu einer geringen Ausschussrate.

Überraschenderweise wurde gefunden, dass sich insbesondere solche Substratmaterialien für die Herstellung transparenter zu beschichtender Formteile eigenen, die nach Verarbeitung zum Spritzgussteil eine bestimmte Potenzialverteilung auf der Oberfläche des Spritzgussteils aufweisen. Diese Potenzialverteilung kann durch bestimmte bildgebende Verfahren z.B. mit Hilfe einer sogenannten Monroe-Sonde mit gekoppelter Auswertung sichtbar gemacht werden. Hierbei zeigte sich, dass vor allem solche Spritzgussteile von Vorteil sind, welche einen niedrigen Betrag des Potenzials in Verbindung mit einer möglichst homogenen Potenzialverteilung auf der Oberfläche aufweisen. Dies war bislang nicht bekannt und ist ein wichtiges Kriterium für die Güte eines Formteils. So sind z.B. Disks, welche ein niedrigen Betrag des Potenzials in Kombination mit einer möglichst homogenen Potenzialverteilung auf der Oberfläche aufweisen für wiederbeschreibbare optische Datenspeicher von besonderem Vorteil.

Als entscheidendes Qualitätsmerkmal für die Beschichtung von Spritzgussteilen, insbesondere für die Beschichtung von transparenten optischen Disks oder von transparenten Streulichtscheiben, wurde daher überraschenderweise gefunden, dass sich vor allem solche Substratmaterialien im Sinne der Erfindung als positiv erweisen, welche nach einem Spritzgussprozess zu solchen transparenten Formteilen führen, welche einen möglichst niedrigen Betrag des Potenzials in Kombination mit einer homogenen Potenzialverteilung, gemessen in einem definierten Abstand zur Substratoberfläche und bei definierter Temperatur und Luftfeuchtigkeit, aufweisen.

Gegenstand der Erfindung ist daher ein Substratmaterial, vorzugsweise Polycarbonat, zur Herstellung von transparenten zu beschichtenden Spritzgussteilen, wobei bis zu 95-100 % der Oberfläche des nach einem Spritzgussprozess erhaltene Formteil, Potenzialbereiche zwischen -1.5 und +1.5 kV, zu 0 bis 5% der Oberfläche Ladungsbereiche zwischen -1.5 und -2.5 bzw. zwischen +1.5 und +2.5 kV und bis zu 1% Bereiche <-2.5 bzw. >2.5 kV aufweisen.

Materialien mit diesen Eigenschaften lassen sich z.B. besonders gut mit unpolaren Medien, wie z.B. mit Farbstoffen gelöst in organischen Lösungsmitteln beschichten. Bevorzugt handelt es sich bei dem zu beschichtenden Spritzgussformteil um eine Streulichtscheibe oder um Trägermaterial für einen optischen beschreibbaren Datenspeicher.

Als Maß für die Homogenität der elektrischen Ladungsverteilung auf der Diskoberfläche kann z.B. die Standardabweichung des aus der elektrischen Aufladung resultierenden Potenzials (von bestimmten Disksegmenten) dienen. Bevorzugt sollte die Standardabweichung des aus der elektrischen Aufladung resultierenden Potenzials in den Oberflächensegmenten 0.6 kV nicht überschreiten.

Insbesondere bevorzugt ist eine Oberfläche, die einen Potenzialbereich von -1.5 kV bis + 1.5 kV aufweist, d.h. die keine oder nur geringe Potenziale hat. Hierbei ist nur die Oberfläche des Spritzgusskörpers relevant, d.h. bei beispielsweise einer CD oder DVD nur der Bereich bis zum Stapelring und nicht der Innenlochbereich.

Das elektrische Potenzial hervorgerufen durch Oberflächenladungen auf dem entsprechenden Substrat ist wesentlich von der Geometrie und den Dimensionen des Spritzgussartikels und Art des Spritzgussprozesses abhängig. Deshalb ist es wichtig, die Messung an dem zu beschichtenden Spritzgusskörper selbst, wie z.B. eine Disk für einen optischen Datenträger, durchzuführen.

Alle oben beschriebenen und gemessenen Werte gelten für Formteile, die über einen prinzipiell bekannten Spritzprozess bei bestimmter Luftfeuchtigkeit und Raumtemperatur ohne den Einsatz von Ionisatoren hergestellt wurden.

Um eine gute Beschichtbarkeit der Disks im Produktionsprozess zu gewährleisten, werden häufig sogenannte Ionisatoren eingesetzt, welche einen ionisierten Luftstrom über die Disks leiten. Die oben genannten Messwerte für erfindungsgemäße Substratmaterialien wurden ohne den Einsatz von Ionisatoren erzielt. Dies ist ein weiterer Vorteil der Erfindung, da der Einsatz von Ionisatoren den Produktionsprozess verteuert. Ionisatoren können allerdings zusätzlich eingesetzt werden.

Ebenfalls Gegenstand der Erfindung sind die aus den erfmdungsgemäßen Substratmaterialien hergestellten Formteile wie z.B. Disks für beschreibbare optische Datenspeicher oder Materialien aus dem Bereich des Automotive Glazings wie z.B. Streulichtscheiben.

Zur Herstellung der beschichtbaren transparenten Spritzgussteile, bevorzugt optische Datenspeicher, sind geeignet:
Thermoplaste wie Polycarbonat auf Basis von Bisphenol-A (BPA-PC), Polycarbonat auf Basis von Trimethyl-Cyclohexyl-Bisphenol-Polycarbonat (TMC-PC), Fluorenyl-Polycarbonat, Polymethylmethacrylat, cyclisches Polyolefin-Copolymer, hydrierte Polystyrole (HPS) sowie amorphe Polyolefme und Polyester.

Die erfindungsgemäßen Substratmaterialien und daraus erhältliche Spritzgusskörper, insbesondere Disks, lassen sich durch Wahl geeigneter Prozessparameter herstellen.

Die Ladungsverteilung auf einem Spritzgusskörper, die nach Verarbeitung des Substratmaterials erhalten wird, kann durch mehrere Faktoren beeinflusst werden. Beispielsweise ist die Reinheit der Edukte und Hilfsstoffe von Bedeutung. Ferner können Prozessparameter wie das molare Verhältnis von eingesetztem Bisphenol und Phosgen, Temperaturen während der Reaktion, Reaktions- und Verweilzeiten maßgebend sein. Für den Fachmann besteht die Aufgabe darin, den Prozess derart zu steuern, dass ein Substratmaterial zur Verfügung gestellt wird, welches die gewünschte Ladungsverteilung auf dem Spritzgusskörper erzeugt. Die beschriebene Messung der Ladungsverteilung ist für den Fachmann ein geeignetes Instrument den Prozess zu kontrollieren.

Eine geeignete Auswahl von Prozessparametern, um das gewünschte Substratmaterial zu erhalten, kann wie folgt aussehen:
Eine Möglichkeit zur Herstellung des erfindungsgemäßen Substratmaterials ist die Wahl bestimmter Prozessparameter während der Herstellung des Substratmaterials in einem kontinuierlichen Phasengrenzflächenprozess. Während der verwendete Überschuss an Phosgen, bezogen auf die Summe der eingesetzten Bisphenole, bei der üblichen kontinuierlichen Polycarbonatsynthese zwischen 3 und 100 mol-%, bevorzugt zwischen 5 und 50 mol-% liegt, wird das erfindungsgemäße Substratmaterial bei Phosgenüberschüssen von 8 bis 17 mol-% hergestellt. Dabei wird über einmalige oder mehrfache Nachdosierung von Natronlauge oder entsprechende Nachdosierung von Bisphenolatlösung der pH-Wert der wässrigen Phase während und nach der Phosgendosierung im alkalischen Bereich, bevorzugt zwischen 8,5 und 12 gehalten, währen er nach der Katalysatorzugabe auf 10 bis 14 eingestellt wird. Die Temperatur während der Phosgenierung beträgt 0°C bis 40°C, bevorzugt 5°C bis 36°C.

Die Herstellung der erfindungsgemäßen Polycarbonate erfolgt nach dem Phasengrenzflächenverfahren. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Gemäß diesem Verfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

Für die Herstellung von Polycarbonaten sind geeignete Dihydroxyarylverbindungen solche der Formel (2)

HO-Z-OH (2)

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3) 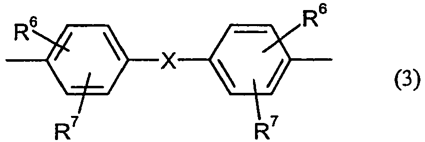 in der
- R⁶ und R⁷: unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der Formel (3a) oder (3b) 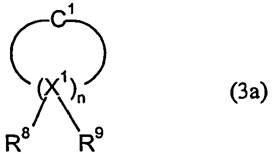 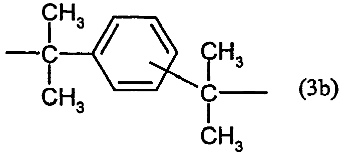 wobei
- R⁸ und R⁹: für jedes X¹ individuell wählbar, unabhängig voneinander Wasserstoff oder C₁ bis C₆-Alkyl, vorzugsweise Wasserstoff, Methyl oder Ethyl bedeuten und
- X¹: Kohlenstoff und
- n: eine ganze Zahl von 4 bis 7, bevorzugt 4 oder 5 bedeuten, mit der Maßgabe, dass an mindestens einem Atom X¹, R⁸ und R⁹ gleichzeitig Alkyl sind.

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Für die Herstellung der erfmdungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigte monofunktionelle p-tert. Butylphenol Kettenabbrecher, wird entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind Vorzugsweise wird der Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. er wird vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl]-propan,
2,4-Bis-(4-hydroxyphenyl-isopropyl)-phenol,
Tetra-(4-hydroxyphenyl)-methan,
Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin; quartäre Ammoniumsalze wie Tetrabutylammonium- / Tributylbenzylammonium-/ Tetraethylammonium- hydroxid / -chlorid / -bromid / -hydrogen-sulfat / -tetrafluoroborat; sowie die den Ammoniumverbindungen entsprechenden Phosphoniumverbindungen. Diese Verbindungen sind als typische Phasengrenzflächen-Katalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung oder Gemische aus Oniumverbindungen als Katalysatoren verwendet, dann ist eine Zugabe vor der Phosgendosierung bevorzugt. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %.

Den erfindungsgemäßen Polycarbonaten können noch die für Polycarbonate üblichen Additive in den üblichen Mengen zugesetzt werden. Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, d.h. als Pulver oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001"

Bevorzugte Thermostabilisatoren sind beispielsweise organische Phosphite, Phosphonate und Phosphane, meist solche bei denen die organischen Reste völlig oder teilweise aus gegebenenfalls substituierten aromatischen Resten bestehen. Als UV-Strabilisatoren werden z.B. substituierte Benztriazole eingesetzt. Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, meist Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt.

Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmodifikatoren sind beispielsweise Pfropfpolymere enthaltend eine oder mehrere Pfropfgrundlagen ausgewählt aus mindestens einem Polybutadienkautschuk, Acrylatkautschuk (vorzugsweise Ethyl- oder Butylacrylatkautschuk), Ethylen-Propylen-Kautschuke und Pfropfmonomeren ausgewählt aus mindestens einem Monomer aus der Gruppe Styrol, Acrylnitril, Alkylmethacrylat (vorzugsweise Methylmethacrylat) oder interpenetrierende Siloxan- und Acrylat-Netzwerke mit aufgepfropftem Methylmethacrylat oder Styrol-Acrylnitril.

Des Weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Gegenstand der vorliegenden Anmeldung sind weiterhin die aus den erfindungsgemäßen Substratmaterialien erhältlichen Extrudate und Formteile, insbesondere solchen zur Verwendung im transparenten Bereich, ganz besonders im Bereich optischer Anwendungen wie z.B. Platten, Stegplatten, Verglasungen, Streuscheiben, Lampenabdeckungen, oder optischer Datenspeicher, wie Audio-CD, CD-R(W), DVD, DVD-R(W), Minidisks in ihren verschiedenen nur lesbaren oder aber einmalbeschreibbaren gegebenenfalls auch wiederholt beschreibbaren Ausführungsformen.

Gegenstand der vorliegenden Erfmdung ist weiterhin die Verwendung der erfindungsgemäßen Polycarbonate zur Herstellung von Extrudaten und Formteilen.

Das erfindungsgemäße Substratmaterial, vorzugsweise Polycarbonat, kann im Spritzguss nach bekannten Verfahren verarbeitet werden. Eine so hergestellte Disk kann z.B. eine Audio-CD, eine Super-Audio-CD, CD-R, CD-RW, DVD, DVD-R, DVD+R, DVD-RW, DVD+RW oder BR sein.

So besteht die CD-R (write once, read many) aus einem Substrat mit konzentrisch geformten Führungsvertiefungen (Pregroove), die im Spritzgussprozess von einer Nickel-Matrize übertragen werden. Über eine Matrize, welche Vertiefungen im Submikrometermaßstab enthält, werden diese im Spritzgussprozess genau auf die Oberfläche des Substrats übertragen. Die CD-R besteht aus dem oben erwähnten Substrat, aus einer Farbstoff-Aufzeichnungsschicht, einer Reflektionsschicht, sowie einer Schutzschicht welche in dieser Reihenfolge auf das Substrat aufgetragen bzw. auflaminiert werden. Ein anderes Beispiel für eine einmal beschreibbare und mehrfache wiederauslesbare optische Disk ist die DVD-R, welche aus dem Substrat, einer Farbstoff-Aufzeichnungsschicht, einer Reflexionsschicht sowie optional aus einer Schutzschicht besteht und ebenfalls in dieser Reihenfolge auf das oben beschriebene Substrat aufgetragen werden und mit einer zweiten Disk ("Dummy Disk") verklebt werden.

Der Auftrag der Farbstoffschicht erfolgt über einen "Spin-coating" Prozess. In diesem Produktionsschritt wird der jeweilige Farbstoff, gelöst in einem organischen Lösungsmittel, auf die Informationsschicht des Substrats aufgetragen und durch Rotation der Disk in radialer Richtung gleichmäßig in die Vertiefungen des Substrats eingebracht. Nach diesem Schritt erfolgt die Trocknung der Farbstoffschicht.

Der zu verwendende Farbstoff für die oben beschriebene Anwendung besitzt einen Absorptionsbereich der im Bereich des verwendeten Lasers liegt (300 - 850 nm). Beispiele für Farbstofftypen sind z.B. Cyanine, Phthalocyanine, Squarylium-Farbstoffe, Polymethine, Pyrilium und Thiopyriliumfarbstoffe, Indoaniline, Naphthochinone, Anthrachinone, verschiedene Metall-Chelatkomplexe wie z.B. Azo-Koordinationsverbindungen, Cyanine oder Phthalocyanine. Diese Farbstoffe besitzen eine gute Signalempfindlichkeit sowie gute Löslichkeit in organischen Lösungsmitteln und Lichtechtheit und sind somit bevorzugte Farbstoffe für oben beschriebene Anwendungen.

Beispiele für Lösungsmittel sind Ester wie Butylacetat, Ketone wie Methyethylketon, Cyclohexanon, Methyliosbutylketon und 2,4-Dimethyl-4-heptanon (DMH), chlorierte Kohlenwasserstoffe wie 1,2-Dichlorethan, und Chloroform, Amide wie Dimethylformamid, Kohlenwasserstoffe wie Cyclohexan, Methylcyclohexan oder Ethylcyclohexan, Ether wie THF und Dioxan, Alkohole wie Ethanol, Propanol, Isoprpanol, n-Butanol, und Diacetonalkohol, fluorierte Lösungsmittel wie 2,2,3,3-Tetrafluorpropanol, und Glykolether wie Ethylenglykolmonomethylether, und Propylenglykolmonomethylether. Diese können einzeln oder als Mischungen eingesetzt werden. Bevorzugte Lösungsmittel sind fluorierte Lösungsmittel wie 2,2,3,3-Tetrafluorpropanol, Octafluorpentanol und Dibutylether.

Über eine Sputtermethode kann auf die Farbstoffschicht eine Reflexionsschicht z.B. bestehend aus Gold oder Silber aufgebracht werden. Optional kann eine Schutzschicht auf die Reflexionsschicht aufgetragen werden.

Das erfindungsgemäße Disk-Substrat und die erfindungsgemäße optische Disk zeigen deutlich verbesserte Antistatikeigenschaften und verbesserte Beschichtbarkeit.

Das Spritzgussteil wird nach üblichen Spritzgussverfahren erhalten. Im Beispielteil der vorliegenden Anmeldung wird das Spritzgussteil wie folgt hergestellt:
Zur Herstellung der erfindungsgemäßen Formteile wird eine optische Disk gewählt; es werden folgende Spritzgussparameter und Bedingungen eingestellt:
   Maschine: Netstal Discjet
   Matritze: Audio-Stamper
   Zykluszeit: 4,2 - 4,6 s (in den genannten Beispielen: 4,4 s)
   Massetemperatur: 310 - 330°C Substratdimensionen : Audio-CD
   Werkzeugtemperatur matrizenseitig: 60°C

Vor Beginn des Spritzgussprozesses wird ein neuer Audio-Stamper in die Maschine eingesetzt. Vor Einsetzen des neuen Stampers muss die gesamte Spritzgussanlage von vorangegangenem Material gereinigt sein, damit die Messwerte nicht verfälscht werden.

Das Verfahren zur Messung des Oberflächenpotenzials erfolgt über eine Monroe-Sonde der Firma MONROE ELECTRONICS, INC., Lyndonville, NY 14098, USA welche zur Messung von elektrischen Potenzialen geeignet ist. Die Messung erfolgt im Abstand von 3.5 mm von der Substratoberfläche. Der Abtastbereich beträgt jeweils 12 cm in X- und Y- Richtung. Das Oberflächenpotenzial wird in Schritten von jeweils 2 mm in X- und Y- Richtung gemessen. Die Potenzialwerte werden an dem Analogausgang des Messverstärkers der Monroe- Sonde in einen äquivalente Spannungswert umgesetzt. Diese Spannungswerte werden von dem Analogeingang einer PC-Interfacekarte der Firma BurrBrown mittels einer eigenentwickelten Software (TurboPascal) unter Verwendung von TurboPascal- Routinen der Firma BurrBrown zunächst in einem PC gespeichert und nach erfolgter Abtastung werden die gesamten Daten als Textfile auf Diskette gespeichert. Zur besseren visuellen Darstellung der Messwerte, werden die Werte mittels der Software Origin in ein Falschfarbenbild umgerechnet. Dabei wird der Potenziabereich von -3500 V bis +3500 V in 32 Farbbereiche unterteilt. Die Farben gehen von blau über grün und gelb nach rot. Z.B. wird dem negativsten Potenzialbereich -3500 V bis -3281 V die Farbe dunkelblau zugeordnet und dem positivsten Potenzialbereich +3281 V bis +3500 V die Farbe dunkelrot.

Zur Berechnung der Ladungssegmente werden die Messwerte (Rohdaten) in kartesische Koordinaten in einem Wertebereich von -30 bis +30 umgewandelt. Diese Werte werden dann in ebene Polarkoordinaten umgewandelt. Um nur die relevante Fläche zu erfassen, werden alle Werte mit r <12 mm (Innenlochbereich) bzw. r >29 mm eliminiert. Die dann resultierenden Werte werden in die entsprechenden Ladungsbereiche sortiert und ausgezählt.

Die Disks werden innerhalb der ersten 24 Stunden nach Herstellung hinsichtlich der Potenzialverteilung gemessen. Dabei darf die Disk nicht mit Metall in Berührung kommen, da sonst die Potenzialmessung beeinträchtigt wird. Ferner müssen evtl. vorhandene Ionisatoren abgeschaltet sein.

Bei der Durchführung der Messung ist darauf zu achten, dass die Luftfeuchtigkeit während der Messung 30 bis 60 %, vorzugsweise 35 bis 50 % und die Raumtemperatur 25 bis 28°C beträgt.

Der Farbstoffauftrag kann wie oben dargestellt über "Spin coating" erfolgen. Als Farbstoff wird vorzugsweise ein Phthalocyanin und als Lösungsmittel vorzugsweise Dibutylether verwendet. Die Rotationsgeschwindigkeit bei Auftrag des Farbstoffs beträgt 200 U/min. Zur Verteilung der Lösung über die gesamte Disk wird die Geschwindigkeit auf 5000 U/min gesteigert.

Die Messung der Beschichtbarkeit mit Farbstoff kann z.B. durch visuelle Untersuchung, durch Kamerascanner oder durch lichtmikroskopische Untersuchung des Innenbereichs der mit Farbstoff beschichteten Disk erfolgen. Wenn an einer Stelle des äußeren Farbstoffrandes eine Abweichung vom Farbrand von 0.5 mm oder höher festgestellt wird, so gilt das Benetzungsverhalten dieser Disk als ungenügend.

Eine weitere indirekte Möglichkeit die Beschichtbarkeit zu messen, ist die Überprüfung der z.B. mit Farbstoff beschichteten Disk mit einem Kamera- oder Lasersystem. Dabei werden die aufgenommenen Informationen über eine Bildverarbeitungssoftware ausgewertet und auftretende Benetzungsfehler erkannt ("In-line"-Detektion). Defekte Disks werden automatisch aussortiert.

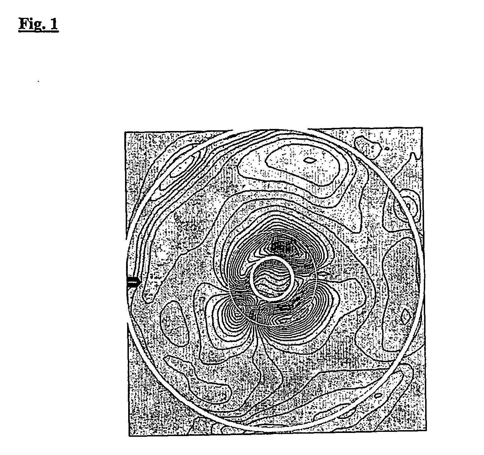

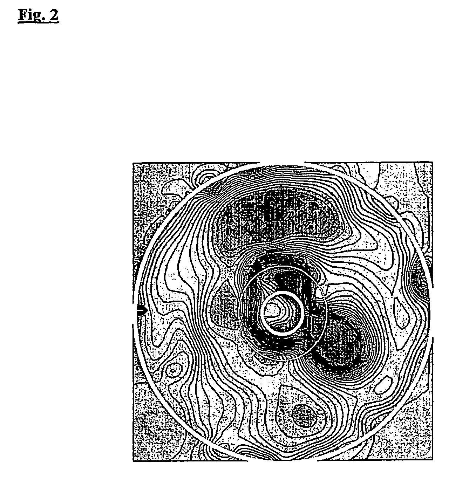

Die Fig. 1 und 2 zeigen die Ladungsverteilung einer Disk (Schwarz-weiß-Kopie der Falschfarbendarstellung).

### Beispiele

### Beispiel 1:

Die Herstellung des Polycarbonats erfolgt nach dem bekannten Phasengrenzflächenverfahren. Es wird nach einem Konti-Verfahren gearbeitet.

Es werden die Bisphenolatlösung (Bisphenol A; Alkaligehalt 2,12 mol NaOH/mol BPA) mit 750 kg/h (14,93 Gew.-%), das Lösungsmittel (Dichlormethan/Chlorbenzol 1:1) mit 646 kg/h und das Phosgen mit 56,4 kg/h eingespeist und zur Reaktion gebracht. Die Temperatur im Reaktor beträgt 35°C. Ferner wird Natronlauge (32 Gew.-%) mit 9,97 kg/h ebenfalls zudosiert. Im Verlauf der Aufkondensation wird eine zweite Menge Natronlauge (32 Gew.-%) mit 29,27 kg/h sowie einer Lösung von Kettenabbrechern (11,7 Gew.-% tert. Butylphenol in Methylenchlorid/Chlorbenzol 1:1) und 34,18 kg/h dosiert. Danach wird N-Ethylpiperidin gelöst in Methylenchlorid/Chlorbenzol (1:1; 2,95 Gew.-% N-Ethylpiperidin) mit 33,0 kg/h als Katalysator eingespeist. Die Phasen werden getrennt, die organische Phase wird einmal mit verdünnter Salzsäure und fünfmal mit Wasser gewaschen. Anschließend wird die Polycarbonatlösung eingeengt, in einem Eindampfkessel aufkonzentriert und die Polymerschmelze über einen Ausdampfextruder abgesponnen und granuliert.

Das erhaltene Granulat wird dann über eine Netstal Discjet Spritzgussmaschine (siehe vorne) bei einer Zykluszeit von 4.4 Sekunden unter oben angegebenen Parametern zu Disks verarbeitet. Als Matritze wird ein Audiostamper verwendet.

Das Ergebnis der Potenzialmessung einer Disk nach 2 Stunden kontinuierlichen Spritzgussprozess ist in Fig. 1 dargestellt.

**Tabelle 1 (Auswertung der Fig. 1)**

| Ladungssegmente | Anzahl Ladungssegmente | %-Anteil der Ladungssegmente bezogen auf Gesamtfläche |
|---|---|---|
| > +2.5 | 0 | 0.00 |
| +1.5 bis +2.5 kV | 0 | 0.00 |
| +0.5 bis +1.5 kV | 112 | 5.28 |
| -0.5 bis +0.5 kV | 1569 | 74.01 |
| -1.5 bis -0.5 kV | 434 | 20.47 |
| -2.5 bis -1.5 kV | 5 | 0.24 |
| < -2.5 | 0 | 0.00 |

Man erkennt, dass die Ladungsverteilung sehr einheitlich ist.

Die Disks werden wie oben beschrieben mit einem Phthalocyanin gelöst in Dibutylether im Spincoatprozess beschichtet. Die Rotationsgeschwindigkeit bei Auftrag des Farbstoffs beträgt 200 U/min. Zur Verteilung der Lösung über die gesamte Disk wird die Geschwindigkeit auf 5000 U/min gesteigert. Die visuelle Begutachtung ergibt keine Defekte der Farbstoffschicht.

### Beispiel 2 (Vergleichsbeispiel):

Die Herstellung des Polycarbonats erfolgt wie in Beispiel 1 beschrieben. Allerdings werden in den Reaktor die Bisphenolatlösung (Bisphenol A) mit 750 kg/h (14,93 Gew.-%), das Lösungsmittel (Dichlormethan/Chlorbenzol 1:1) mit 646 kg/h und das Phosgen mit 58,25 kg/h eingespeist. Ferner wird Natronlauge (32 Gew.-%) mit 12,34 kg/h ebenfalls zudosiert. Die zweite Menge Natronlauge beträgt 36,20 kg/h; die Menge an Kettenabbrecher 34,18 kg/h bei den in Beispiel 5 angegebenen Konzentrationen. Die Menge an Katalysator beträgt 33 kg/h. Die Aufarbeitung erfolgt wie in Beispiel 1 angegeben.

Das erhaltene Granulat wird dann über eine Netstal Discjet Spritzgussmaschine (siehe vorne) bei einer Zykluszeit von 4.4 Sekunden unter oben angegebenen Parametern zu Disks verarbeitet. Als Matritze wird ein Audiostamper verwendet.

Bei mit Farbstoff beschichteten Disks zeigen sich deutliche Defekte in der Farbstoffschicht.

**Tabelle 2 (Auswertung von Fig. 2)**

| Ladungssegmente | Anzahl Ladungssegmente | %-Anteil der Ladungssegmente bezogen auf Gesamtfläche |
|---|---|---|
| > +2.5 | 395 | 18.70 |
| +1.5 bis +2.5 kV | 692 | 32.77 |
| +0.5 bis +1.5 kV | 728 | 34.47 |
| -0.5 bis +0.5 kV | 200 | 9.47 |
| -1.5 bis -0.5 kV | 31 | 1.47 |
| -2.5 bis -1.5 kV | 15 | 0.71 |
| < -2.5 | 51 | 2.41 |

**Tabelle 3**

| Bsp-Nr.: | Ladungshomogenität (Standardabweichung) | Oberflächenpotenzial Ladungsspitzen (pos. und negativ) | Defekte am Innenrand |
|---|---|---|---|
| 1 | 0.41 | +1.5/-2.5 | nein |
| 2 (Vergl.) | 1.21 | >+3.5 / <-3.5 | ja |

Standardabweichung ist die Varianz der einzelnen Ladungssegmente.

## Patentansprüche

1. Polycarbonat mit p-tert. Butylphenol als Endgruppe als Substratmaterial, erhältlich nach dem kontinuierlichen Phasengrenzflächenverfahren durch Umsetzung von Bisphenolen und Phosgen, wobei Phosgen in einem Überschuss von 8 bis 17 mol-%, bezogen auf die Summe der eingesetzten Bisphenole, verwendet wird, **dadurch gekennzeichnet, dass** an der Oberfläche eines entsprechenden Formteils Potenzialbereiche mit Ladungen von -1.5 bis +1.5 kV vorhanden sind, deren Anteil an der Gesamtfläche zwischen 95 und 100% beträgt, und Potenzialbereiche zwischen -1.5 und -2.5 bzw. +1.5 bis +2.5 vorhanden sind, deren Anteil 0 bis 5% beträgt, und Potenzialbereiche <-2.5 kV bzw. >+2.5 kV vorhanden sind, deren Anteil bis zu 1% der Gesamtoberfläche der Disk beträgt, wobei die Potenzialmessung mittels einer Monroe-Sonde im Abstand von 3.5 mm von der Substratoberfläche erfolgt und der Abtastbereich jeweils 12 cm in X- und Y-Richtung beträgt und Potenzial in Schritten von jeweils 2 mm in X- und in Y-Richtung gemessen wird.

2. Polycarbonat gemäß Anspruch 1 **dadurch gekennzeichnet, dass** das Potenzial an der Oberfläche eines entsprechenden Formteils Potenzialbereiche zwischen -1.5 kV und +1.5 kV nicht über- bzw. unterschreitet, wobei der Innenlochbereich nicht berücksichtigt wird.

3. Polycarbonat gemäß Anspruch 1 und/oder 2 **dadurch gekennzeichnet, dass** am entsprechenden Formteil die Standardabweichung des aus der elektrischen Aufladung resultierenden Potentials in den Ladungssegmenten 0.6 kV nicht überschreitet.

4. Polycarbonat gemäß Anspruch 1 bis 3 , **dadurch gekennzeichnet, dass** das Formteil zur Messung der Potenzialbereiche eine Disk ist.

5. Optische Datenspeicher oder Streuscheibe, erhältlich aus Polycarbonat nach Ansprüchen 1 bis 4.

## Claims

1. Polycarbonate with p-tert-butylphenol as end group as substrate material, obtainable by the continuous interfacial process via reaction of bisphenols and phosgene, where an excess of from 8 to 17 mol% of phosgene is used, based on the entirety of the bisphenols used, **characterized in that** potential regions with charges of from -1.5 to +1.5 kV are present on the surface of a corresponding moulding, and the proportion of these, based on the entire area, is from 95 to 100%, and potential regions between -1.5 and -2.5 and, respectively, +1.5 and +2.5 are present, and the proportion of these is from 0 to 5%, and potential regions < -2.5 kV and, respectively, > +2.5 kV are present, and the proportion of these amounts to up to 1% of the total surface area of the disc, where the potential is measured by means of a Monroe probe at a distance of 3.5 mm from the substrate surface and the scanning region in each case amounts to 12 cm in the X- and Y-direction, and potential is measured in steps of in each case 2 mm in the X- and Y-direction.

2. Polycarbonate according to Claim 1, **characterized in that** the potential on the surface of a corresponding moulding is not above or below potential regions between -1.5 kV and +1.5 kV, where the inner hole region is not considered.

3. Polycarbonate according to Claim 1 and/or 2, **characterized in that** the standard deviation of the potential resulting from the electrical charging in the charge segments on the corresponding moulding does not exceed 0.6 kV.

4. Polycarbonate according to any of Claims 1 to 3, **characterized in that** the moulding for measurement of the potential regions is a disc.

5. Optical data storage media or diffuser screen, obtainable from polycarbonate according to Claims 1 to 4.

## Revendications

1. Polycarbonate comportant du p-tert-phénol en tant que groupe en bout de chaîne, en tant que matériau substrat, pouvant être obtenu selon le procédé continu en interphase par mise en réaction de bisphénols et de phosgène, en utilisant le phosgène en un excès de 8 à 17 % en moles, par rapport à la somme des bisphénols utilisés, **caractérisé en ce qu'**à la surface d'une pièce moulée correspondante sont présentes des zones de potentiel ayant des charges de -1,5 à +1,5 kV, dont la proportion par rapport à la surface totale est comprise entre 95 et 100 %, et sont présentes des zones de potentiel entre -1,5 et -2,5 kV ou de +1,5 à +2,5, dont la proportion vaut de 0 à 5 %, et sont présentes des plages de potentiel de <-2,5 kV ou >+2,5 kV, dont la proportion représente jusqu'à 1 % de la surface totale du disque, la mesure du potentiel s'effectuant au moyen d'une sonde Monroe à une distance de 3,5 mm de la surface du substrat et la zone de balayage étant chaque fois de 12 cm dans chacun des sens X et Y et le potentiel étant mesuré par incréments de 2 mm dans chacun des sens X et Y.

2. Polycarbonate selon la revendication 1, **caractérisé en ce que** le potentiel à la surface d'une pièce moulée correspondante ne dépasse ni vers le haut ni vers le bas les plages de potentiel comprises entre -1,5 kV et +1,5 kV, la zone du trou intérieur n'étant pas prise en considération.

3. Polycarbonate selon la revendication 1 et/ou la revendication 2, **caractérisé en ce que** sur la pièce moulée correspondante l'écart-type du potentiel résultant de la charge électrique dans les segments de charge n'excède pas 0,6 kV.

4. Polycarbonate selon l'une quelconque des revendications 1 à 3, **caractérisé en ce que** pour la mesure des zones de potentiel la pièce moulée est un disque.

5. Diffuseur ou mémoire de données optique, pouvant être obtenu(e) à partir de polycarbonate selon les revendications 1 à 4.
